# EUROPEAN PATENT APPLICATION

(11) **EP 4 340 118 A1**
(43) Date of publication of application: **20.03.2024**
(21) Application number: 23189312.4
(22) Date of filing: 02.08.2023
(51) Int. Cl.: H01M 50/538, H01M 4/64, H01M 50/59, H01M 10/04, H01M 10/0525, H01M 50/586

(54) **ELECTRODE ASSEMBLY AND RECHARGEABLE BATTERY INCLUDING THE SAME**

(30) Priority: 13.09.2022 KR 20220115098
(71) Applicant: Samsung SDI Co., Ltd., Yongin-si, Gyeonggi-do 17084 (KR)
(72) Inventor: PARK, Junghyun, 17084 Yongin-si (KR); KIM, Munsung, 17084 Yongin-si (KR); SHIN, Jooyoun, 17084 Yongin-si (KR); KIM, Joungku, 17084 Yongin-si (KR); KIM, Junghyun, 17084 Yongin-si (KR); LEE, Dongsub, 17084 Yongin-si (KR)
(74) Representative: Marks & Clerk LLP

(57) **Abstract**

An electrode assembly includes a first electrode, a second electrode, and a separator disposed between the first electrode and the second electrode. The first electrode includes a first coated portion and a first uncoated portion disposed at an edge of the first coated portion. The second electrode includes a second coated portion and a second uncoated portion disposed at an edge of the second coated portion. A first insulating layer is positioned on one surface of the first uncoated portion, and a second insulating layer is positioned on the other surface of the first uncoated portion. Lengths of the first insulating layer and the second insulating layer are different from each other.

## Description

### BACKGROUND OF THE INVENTION

### (a) Field of the Invention

The present disclosure relates to an electrode assembly and a rechargeable battery including the same.

### (b) Description of the Related Art

Demand for a rechargeable battery as an energy source is increasing according to technology development and demand for a mobile device. A cylindrical rechargeable battery among various types of rechargeable batteries may include an electrode assembly formed by disposing two electrodes on both surfaces of a separator to wind the disposed electrodes on both surfaces of the separator in a form of a jelly roll, a center pin disposed at a hollow portion of a center of the electrode assembly, a case including the electrode assembly, and a cap assembly sealing an open side of the case.

When the rechargeable battery is charged and discharged, swelling, deformation, or expansion of a negative active material layer may occur, and in this case, a short circuit may occur due to contact of two electrodes of different polarities.

In particular, in a case of the cylindrical rechargeable battery, an uncoated portion (e.g. a first uncoated portion) of one of the two electrodes constituting the electrode assembly may be folded, and the folded first uncoated portion may be electrically connected to a current collector. In this case, an end portion of the other electrode may be disposed to face the folded first uncoated portion. For example, when the negative active material layer expands, an end portion of a negative electrode may contact a folded uncoated portion of a positive electrode so that a short circuit occurs.

### SUMMARY OF THE INVENTION

The present disclosure is to provide an electrode assembly and a rechargeable battery including the electrode assembly capable of preventing a short circuit from occurring when an uncoated portion of a negative electrode is contacted with an end portion of a positive electrode even when a negative active material layer expands.

An electrode assembly according to an embodiment of the present disclosure includes a first electrode, a second electrode, and a separator. The first electrode includes a first coated portion and a first uncoated portion disposed at an edge of the first coated portion. The second electrode includes a second coated portion and a second uncoated portion disposed at an edge of the second coated portion. The separator is disposed between the first electrode and the second electrode. A first insulating layer is positioned on one surface of the first uncoated portion, and a second insulating layer is positioned on the other surface of the first uncoated portion. Lengths of the first insulating layer and the second insulating layer are different from each other.

The first uncoated portion may be bent toward a center of the electrode assembly and may have a portion overlapping and electrically connected to an adjacent first uncoated portion. The other surface of the first uncoated portion may face an end portion of the second electrode while being spaced apart from the end portion of the second electrode.

The first uncoated portion may include a first region extending from the first coated portion and a second region bent from the first region. The second region may have a portion overlapping the adjacent first uncoated portion. The first insulating layer may be disposed on the first region, and the second insulating layer may be disposed on the second region.

The second insulating layer may be disposed on a part of the second region. The second region may have an exposed surface where the other surface of the first uncoated portion is exposed, and the exposed surface may be in contact with one surface of the adjacent first uncoated portion.

The second insulating layer may be further disposed on the first region.

The first electrode may be a positive electrode, and the second electrode may be a negative electrode.

A rechargeable battery according to an embodiment of the present disclosure includes: the electrode assembly; a cylindrical case accommodating the electrode assembly; a center pin disposed at a center of the electrode assembly; a cap assembly that covers and seals the cylindrical case; and an electrolyte accommodated together with the electrode assembly within the case.

At least some of the above and other features of the invention are set out in the claims.

### BRIEF DESCRIPTION OF THE DRAWINGS

FIG. 1 is a cross-sectional view of a rechargeable battery according to an embodiment of the present disclosure.
FIG. 2 is a cross-sectional view showing a portion of an electrode assembly of FIG. 1.
FIG. 3 is a cross-sectional view showing a portion of the electrode assembly of FIG. 1 according to another embodiment.
FIG. 4 is a view for explaining an effect according to an embodiment of the present disclosure.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure.

Since sizes and thicknesses of constituent members shown in the accompanying drawings are arbitrarily given for better understanding and ease of description, the present disclosure is not limited to the illustrated sizes and thicknesses.

In the drawings, the thickness of layers, films, panels, regions, etc., are exaggerated for clarity. In the drawings, for better understanding and ease of description, thicknesses of some layers and areas are exaggeratedly displayed. It will be understood that when an element such as a layer, film, region, or substrate is referred to as being "on" or "above" another element, it can be directly on the other element or intervening elements may also be present.

In addition, unless explicitly described to the contrary, the word "comprise", and variations such as "comprises" or "comprising", will be understood to imply the inclusion of stated elements but not the exclusion of any other elements.

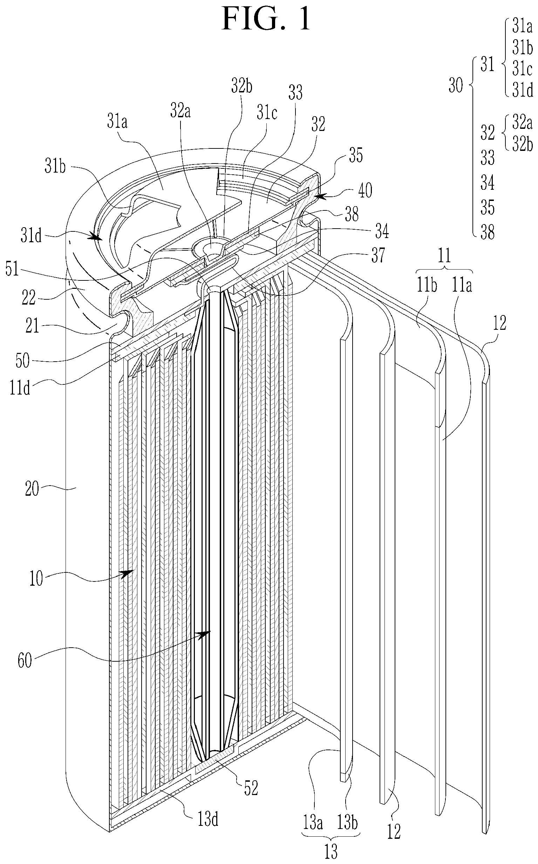

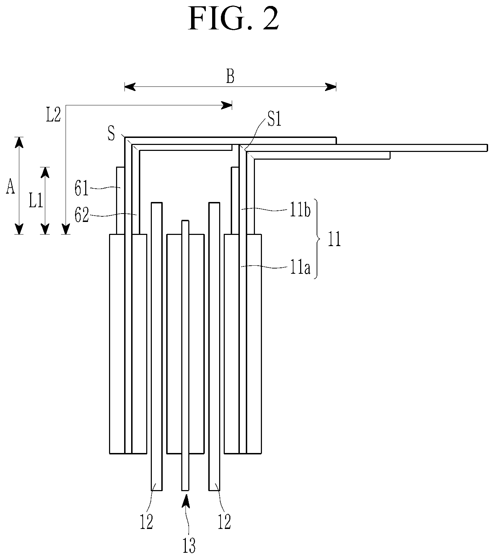

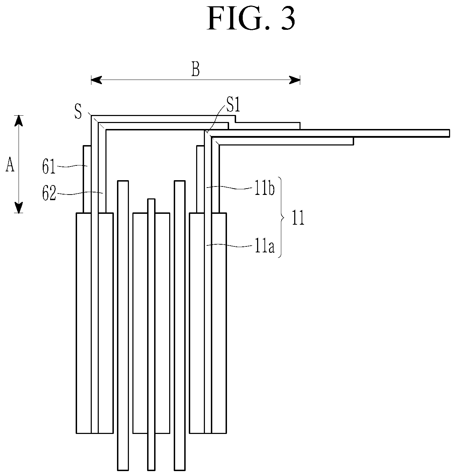

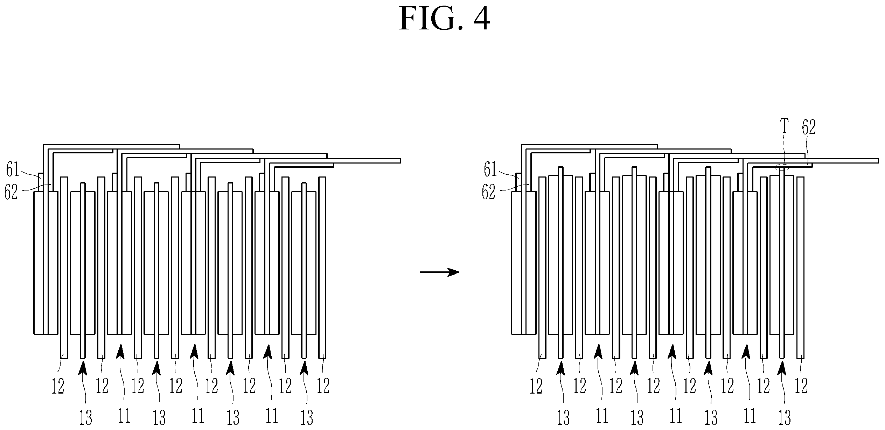

FIG. 1 is a cross-sectional view of a rechargeable battery according to an embodiment of the present disclosure, FIG. 2 is a cross-sectional view showing a portion of an electrode assembly of FIG. 1, FIG. 3 is a cross-sectional view showing a portion of the electrode assembly of FIG. 1 according to another embodiment, and FIG. 4 is a view for explaining an effect according to an embodiment of the present disclosure.

As shown in FIG. 1, the rechargeable battery according to the embodiment of the present disclosure includes the electrode assembly 10, a case 20 accommodating the electrode assembly 10, a cap assembly 30 coupled to an opening of the case 20 through a gasket and electrically connected to the electrode assembly 10, an insulating plate 50 provided between the cap assembly 30 and the electrode assembly 10, and a center pin 60 disposed at a center of the electrode assembly 10.

The electrode assembly 10 includes a first electrode 11, a separator 12, and a second electrode 13 that are sequentially stacked. The electrode assembly 10 may be a cylindrical jelly roll in which the first electrode 11, the separator 12, and the second electrode 13 are stacked and then wound around the center pin 60.

The separator 12 is disposed between the first electrode 11 and the second electrode 13, and may be insulated between the first electrode 11 and the second electrode 13. The separator 12 may use polyethylene, polypropylene, polyvinylidene fluoride, or a multilayer film of two or more layers thereof, and may use a mixed multilayer film such as a polyethylene/polypropylene 2-layer separator, a polyethylene/polypropylene/polyethylene 3-layer separator, a polypropylene/polyethylene/polypropylene 3-layer separator, or the like.

The first electrode 11 may include a first coated portion 11a and a first uncoated portion 11b, and the second electrode 13 may include a second coated portion 13a and a second uncoated portion 13b. Each of the first coated portion 11a and the second coated portion 13a is a region where an active material layer is disposed on both sides of a current collector composed of a thin metal plate. Each of the first uncoated portion 11b and the second uncoated portion 13b is a region where the surface of the current collector is exposed because the active material layer is not disposed on the current collector. The first uncoated portion 11b and the second uncoated portion 13b may be positioned at opposite ends of each other. The first electrode 11 may be a positive electrode, and the second electrode 13 may be a negative electrode.

The electrode assembly 10 may be rolled in a jelly roll shape. A first electrode current collector 11d may be positioned on one side (upper side with reference to FIG. 1) of the electrode assembly 10, and a second electrode current collector 13d may be positioned on the other side (lower side with reference to FIG. 1) of the electrode assembly 10. The first electrode current collector 11d may be connected to the first uncoated portion 11b of the electrode assembly 10, and a second electrode current collector 13d may be connected to the second uncoated portion 13b of the electrode assembly 10.

The second electrode current collector 13d is in contact with the case 20, while the first electrode current collector 11d is not in contact with the case 20. For example, the first electrode current collector 11d may have a smaller width than the second electrode current collector 13d.

Referring to FIGS. 1 and 2, the first uncoated portion 11b of the first electrode 11 may be bent toward the center pin 60 that is a center of the electrode assembly 10, and adjacent first uncoated portions 11b may be stacked overlapping each other to be electrically connected to each other. The first uncoated portion 11b may be electrically connected to the first electrode current collector 11d in an overlapping state.

The first uncoated portion 11b includes one surface (upper surface with reference to FIG. 2) contacting and electrically connected to the first electrode current collector 11d and the other surface (lower surface with reference to FIG. 2) facing an end portion of the second electrode 13. The other surface of the first uncoated portion 11b is spaced apart from the end portion of the second electrode 13.

A first insulating layer 61 is positioned on one surface of the first uncoated portion 11b, and a second insulating layer 62 is positioned on the other surface of the first uncoated portion 11b. The length (L1) of the first insulating layer 61 and the length (L2) of the second insulating layer 62 are different from each other. A direction from one end of the first uncoated portion 11b contacting the first coated portion 11a to the opposite end of the first uncoated portion 11b may be referred to as a longitudinal direction of the first uncoated portion 11b. The lengths (L1 and L2) of the first and second insulating layers 61 and 62 may refer to lengths measured along the longitudinal direction of the first uncoated portion 11b.

The first uncoated portion 11b includes a first region A extending from the first coated portion 11a and a second region B extending from the first region A. The first region A may be parallel to the first coated portion 11a, and the second region B may be bent from the first region A at a bending line S to intersect the first region A. The second region B may include a portion overlapping with the adjacent first uncoated portion 11b.

The first insulating layer 61 may be disposed on the first region A, and the second insulating layer 62 may be disposed on the first region A and on a part of second region B. An end of the first insulating layer 61 may be disposed at an imaginary bending line S at which the first uncoated portion 11b is bent or be disposed below the bending line S.

The second insulating layer 62 may be disposed on a part of the second region B. That is, the second region B may include an exposed surface on which the other surface of the first uncoated portion 11b is exposed because the second insulating layer 62 is not disposed thereon. For example, the second insulating layer 62 may be positioned from the bending line S of the first uncoated portion 11b to the bending line S1 of the adjacent first uncoated portion 11b. The first uncoated portion 11b may overlap the adjacent first uncoated portion 11b on the exposed surface, and may be electrically connected to the adjacent first uncoated portion 11b.

In addition, the second insulating layer 62 may be positioned to extend to the first region A to prevent a shot circuit with the second uncoated portion 13b. In FIG. 2, the case where the second insulating layer is positioned over the entire first region A and a part of the second region B is shown.

On the other hand, in FIG. 2, it is shown that the second insulating layer 62 is positioned from the end of the first uncoated portion 11b in contact with the first coated portion 11a to the bending line S1 of the adjacent first uncoated portion 11b, but the present disclosure is not limited thereto. As illustrated in FIG. 3, an end of the second insulating layer 62 may be disposed to exceed the bending line S1 of the adjacent first uncoated portion 11b.

The first uncoated portion 11b is easily bent due to its thin thickness. Since the thickness of the second insulating layer 62 is small, the first uncoated portion 11b may be easily bent along the end of the second insulating layer 62 to cover the end of the second insulating layer 62. Therefore, even if the second insulating layer 62 is disposed between the first uncoated portion 11b and the adjacent first uncoated portion 11b, the first uncoated portion 11b may be easily contacted and electrically connected to the adjacent first uncoated portion 11b.

Referring to FIG. 4, as the first insulating layer 61 and the second insulating layer 62 are disposed as in an embodiment of the present disclosure, an end (upper end) of the second electrode 13 is in contact with the second insulating layer 62 so that a short circuit does not occur even if the end (upper end) of the second electrode 13 protrudes due to expansion of the active material layer of the second electrode 13 during charging and discharging. In FIG. 4, the contact point between the upper end of the second electrode 13 and the second insulating layer 62 is indicated by T.

Referring again to FIG. 1, a lead tab 37 is electrically connected to the first electrode current collector 11d.

One end of the lead tab 37 may be connected to the first electrode current collector 11d by welding, and the other end of the lead tab 37 may be electrically connected to the cap assembly 30. The lead tab 37 may be bent so that one surface of the lead tab 37 faces the electrode assembly 10 in order to increase a contact area with the cap assembly 30.

The insulating plate 50 having an opening 51 exposing the center pin 60 is disposed on the first electrode current collector 11d.

The insulating plate 50 may be provided to be larger than the first electrode current collector 11d so that the insulating plate 50 contacts an inner surface of the case 20. When the insulating plate 50 is provided to be larger than the first electrode current collector plate 11d, a predetermined gap exists between the first electrode current collector 11d and the case 20 by a width at which the insulating plate 50 protrudes out of the first electrode current collector 11d. The gap between the first electrode current collector 11d and the case 20 may prevent a short circuit due to contact between the first electrode current collector 11d and the case 20.

The lead tab 37 may contact a first auxiliary plate 34 of the cap assembly 30 to be described later to be electrically connected to the first auxiliary plate 34 through the opening 51 of the insulating plate 50.

Since the electrode assembly 10 is wound around the center pin 60, the center pin 60 may be disposed at a center of the electrode assembly 10, and may be disposed parallel to a direction in which the electrode assembly 10 is inserted into the case 20.

The center pin 60 may be minimally deformed or may maintain a shape close to a pre-deformation shape when the center pin 60 receives a front compressive load or a local impact load acting on the outside of the rechargeable battery.

The center pin 60 may be made of a material (for example, a metal having conductivity) having a certain rigidity in order to be minimally deformed against an external impact. Since the center pin 60 has conductivity, both ends of the center pin 60 may be installed to be electrically insulated from the first electrode current collector 11d and the second electrode current collector 13d.

That is, an insulating pad 52 may be disposed between a lower end of the center pin 60 and the second electrode current collector 13d. An upper end of the center pin 60 passes through a through hole disposed at a center of the first electrode current collector 11d in an insulated state to be supported by the insulating plate 50. In this case, the upper end of the center pin 60 may be spaced apart from the through hole of the first electrode current collector 11d, or an insulating member (not shown) may be interposed between the upper end of the center pin 60 and the through hole of the first electrode current collector 11d. Therefore, a movement of the center pin 60 may be restricted in a longitudinal direction of the center pin 60, and the center pin 60 may maintain a stable state at a center of the electrode assembly 10.

One side (upper side) of the case 20 may be open so that the electrode assembly 10 is inserted into the case 20 together with an electrolyte. The case 20 may be made to have approximately the same shape as a jelly roll-shaped electrode assembly 10, and for example, the case 20 may have a cylindrical shape.

The case 20 may be connected to the second electrode current collector 13d to function as a second electrode terminal of the rechargeable battery. Accordingly, the case 20 may be made of a conductive metal such as aluminium, aluminium alloy, or nickel-plated steel. The electrode assembly 10 may be inserted into the case 20 together with the electrolyte, and then may be sealed.

The electrolyte may include a lithium salt and an organic solvent. The lithium salt may include LiPF₆, LiBF₄, and the like. The organic solvent may include ethylene carbonate (EC), propylene carbonate (PC), diethyl carbonate (DEC), ethyl methyl carbonate (EMC), and the like. The electrolyte may be in a liquid, solid, or gel state.

The cap assembly 30 is disposed at the opening of the case 20, and is coupled to the case 20 with the gasket 40 interposed between the cap assembly 30 and the case 20. The gasket 40 insulates the case 20 and the cap assembly 30, and seals the inside of the case 20 accommodating the electrode assembly 10 and the electrolyte.

The cap assembly 30 may include a cap plate 31, a positive temperature coefficient (PTC) element 35, a vent plate 32, an insulating member 33, the first auxiliary plate 34, and a second auxiliary plate 38.

The first auxiliary plate 34 may be electrically connected to the lead tab 37 and may be coupled to the lead tab 37 by welding. The second auxiliary plate 38 may be stacked on the first auxiliary plate 34 to be electrically connected to the first auxiliary plate 34, and may be coupled to the first auxiliary plate 34 by welding. The second auxiliary plate 38 is disposed at a center of the cap assembly 30 corresponding to the center pin 60, and has a through hole exposing the first auxiliary plate 34.

The vent plate 32 is disposed above the second auxiliary plate 38 with the insulating member 33 interposed between the vent plate 32 and the second auxiliary plate 38. An edge of the vent plate 32 may be inserted into the gasket 40 to be coupled to the case 20.

The vent plate 32 may include a vent 32a disposed at a portion corresponding to the center pin 60. The vent 32a protrudes from the vent plate 32 toward the electrode assembly 10, and contacts the first auxiliary plate 34 through the through hole to be electrically connected to the first auxiliary plate 34. The vent plate 32 may have a notch 32b around the vent 32a that guides breakage of the vent 32a.

The vent 32a may be broken under a predetermined pressure condition to release internal gas to the outside and block electrical connection with the first auxiliary plate 34. That is, when an internal pressure of the case 20 rises due to generation of gas, the notch 32b may be broken in advance so that the gas is discharged to the outside through an exhaust port 31d to be described later. Thus, explosion of the rechargeable battery may be prevented.

In addition, when an abnormal reaction continues so that the vent 32a is damaged, an electrical connection between the vent plate 32 and the first auxiliary plate 34 is disconnected. Accordingly, an electrical connection between the cap plate 31 electrically connected to the vent plate 32 and the first auxiliary plate 34 is disconnected so that no more current flows.

The cap plate 31 may include a center plate 31a corresponding to the center pin 60 that is a center of the electrode assembly 10, a plurality of branch portions 31b extending from the center plate 31a toward the gasket 40, and a coupling plate 31c that connects ends of the branch portions 31b and is inserted into the gasket 40 to be coupled to the gasket 40. A space between adjacent branch parts 31b is opened to the outside to form the exhaust port 31d for emitting internal gas.

The branch portion 31b may be bent from the coupling plate 31c to be connected to the center plate 31a so that a center of the cap plate 31 protrudes outside the case 20. The cap plate 31 may be electrically connected to the first electrode current collector plate 11d through the vent plate 32, the second auxiliary plate 38, the first auxiliary plate 34, and the lead tab 37 so that the cap plate 31 is used as a first electrode terminal of the rechargeable battery. Therefore, when a center of the cap plate 31 is made to protrude outside the case 20, a terminal connection with an external device may be facilitated.

On the other hand, the PTC element 35 may be disposed along the coupling plate 31c of the cap plate 31, and is inserted into the gasket 40 in a stacked state between the coupling plate 31c and an edge of the vent plate 32 to be coupled to the gasket 40.

The PTC element 35 may be installed between the cap plate 31 and the vent plate 32 to regulate current flow between the cap plate 31 and the vent plate 32 according to an internal temperature of the rechargeable battery.

When the internal temperature is within a predetermined range, the positive temperature coefficient element 35 acts as a conductor to electrically connect the cap plate 31 and the vent plate 32. However, when the internal temperature exceeds a predetermined temperature, the positive temperature coefficient element 35 has an electrical resistance that increases to infinity. Accordingly, the positive temperature coefficient element 35 may block flow of a charging or discharging current between the cap plate 31 and the vent plate 32.

In a state where the electrode assembly 10 is inserted into the case 20, the vent plate 32, the PTC element 35, and the cap plate 31 are inserted into the gasket 40 in a stacked state at an edge of the cap assembly 30, and then the cap assembly 30 is inserted into an opening of the case 20.

In addition, the cap assembly 30 is fixed to the opening of the case 20 through a crimping process. In this case, a beading portion 21 and a crimping portion 22 may be provided adjacent to the opening of the case 20. The beading portion 21 may be provided through a beading process. The beading portion 21 has a structure in which the beading portion 21 is recessed toward a center in a radial direction of the case 20 at an upper side of the case 20 in a state in which the electrode assembly 10 is accommodated in the case 20, and the beading portion 21 prevents the electrode assembly 10 from moving up and down.

The crimping portion 22 has a structure that relatively protrudes from the beading portion 21 in a radial direction, and is connected to the beading portion 21 so that the crimping portion 22 holds an outer circumferential surface of the cap assembly 30 and upper and lower surfaces connected to the outer circumferential surface with the gasket 40.

While this disclosure has been described in connection with what is presently considered to be practical embodiments, it is to be understood that the disclosure is not limited to the disclosed embodiments. On the contrary, it is intended to cover various modifications and equivalent arrangements included within the scope of the appended claims.

## Claims

1. An electrode assembly, comprising:
a first electrode including a first coated portion and a first uncoated portion disposed at an edge of the first coated portion;
a second electrode including a second coated portion and a second uncoated portion disposed at an edge of the second coated portion; and
a separator disposed between the first electrode and the second electrode,
wherein a first insulating layer and a second insulating layer are respectively positioned on one surface and the other surface of the first uncoated portion, and lengths of the first insulating layer and the second insulating layer are different from each other.

2. The electrode assembly of claim 1, wherein:
the first uncoated portion is bent toward a center of the electrode assembly and has a portion overlapping and electrically connected to an adjacent first uncoated portion, and
the other surface of the first uncoated portion faces an end portion of the second electrode while being spaced apart from the end portion of the second electrode.

3. The electrode assembly of claim 2, wherein:
the first uncoated portion includes a first region extending from the first coated portion and a second region bent from the first region,
the second region has a portion overlapping the adjacent first uncoated portion,
the first insulating layer is disposed on the first region, and
the second insulating layer is disposed on the second region.

4. The electrode assembly of claim 3, wherein:
the second insulating layer is disposed on a part of the second region,
the second region has an exposed surface where the other surface of the first uncoated portion is exposed, and
the exposed surface is in contact with one surface of the adjacent first uncoated portion.

5. The electrode assembly of claim 3 or claim 4, wherein:
the second insulating layer is further disposed on the first region.

6. The electrode assembly of any one of claims 1 to 5, wherein:
the first electrode is a positive electrode, and the second electrode is a negative electrode.

7. A rechargeable battery, comprising:
an electrode assembly of any one of claims 1 to 6;
a cylindrical case accommodating the electrode assembly;
a center pin disposed at a center of the electrode assembly;
a cap assembly that covers and seals the cylindrical case; and
an electrolyte accommodated together with the electrode assembly within the case.
